# EUROPEAN PATENT APPLICATION

(11) **EP 4 539 359 A1**
(43) Date of publication of application: **16.04.2025**
(21) Application number: 24205739.6
(22) Date of filing: 10.10.2024
(51) Int. Cl.: H04B 10/112, H04B 7/185, H04B 10/80

(54) **RADIO COMMUNICATION SYSTEM AND METHOD FOR LOCATION ANALYSIS OBFUSCATION**

(30) Priority: 11.10.2023 US 202318484448
(71) Applicant: Anderson, Matthew, Fredericksburg, VA 22405 (US)
(72) Inventor: Anderson, Matthew, Fredericksburg, VA 22405 (US)
(74) Representative: Isern-Jara, Jaime

(57) **Abstract**

A system and method for obfuscating of host location of a transmission including converting electronic signals into optical signals, transmitting the optical signals over an optical link, receiving the optical signals from the optical link at an electro-optical converter that is elevated in the air and elevated relative to the ground while connected to the optical link, and converting the optical signals into wireless signals via the electro-optical converter and an antenna electrically connected to the electro-optical converter. The optical link may be a laser or an optical fiber that is advantageously protected from electromagnetic interference.

## Description

### BACKGROUND

The modem battlefield is covered by numerous layers of surveillance assets which prevent the covert assembly and operation of troops, equipment, and command centers. Further, the modem battlefield is defined by long-range strikes in the rear that threaten logistics, depots, and command centers. Throughout history, the command center or officer headquarters (HQ) has been a key target and now locating and striking a command center has never been easier for any modestly-capable military. One of the unavoidable identifiers of an HQ is the high level of radio frequency (RF) output and the very simple triangulation of such a signal to determine the location of the HQ. Accordingly, the US Army is now training to move their command post every 15 minutes and reduce signals to bursts. Neither of these are feasible solutions on an increasingly networked battlefield (e.g., net-centric warfare).

### SUMMARY

The systems and methods described herein operate to obfuscate the position of a command center by providing electrically-shielded communication channels that offset the radio signals of the command center from the physical location of the command center. A data transmission system for obfuscation of host location may include a first electro-optical converter to convert electronic signals into optical signals on an optical link, the optical link transporting the optical signals from the first electro-optical converter to a second electro-optical converter, the second electro optical converter receiving the optical signals from the optical link, the second electro optical converter being elevated in the air and elevated relative to the ground while connected to the optical link, andan antenna that converts the optical signals into radio frequency signals together with the second electro optical converter, the antenna being electrically connected to the second electro optical converter.

### BRIEF DESCRIPTION OF THE DRAWINGS

The accompanying drawings, which are incorporated herein and constitute part of this specification, illustrate exemplary implementations of the claims, and together with the general description given and the detailed description, serve to explain the features herein.
FIG. 1 illustrates a communication system according to some implementations.
FIG. 2 illustratesa communication system according to some implementations.
FIG. 3 illustrates a communication system according to some implementations.
FIG. 4 illustrates a radio link establishment method according to some implementations.
FIG. 5 illustrates a transmission method according to some implementations.
FIG. 6 illustrates device for performing these methods according to some implementations.

### DETAILED DESCRIPTION OF THE DRAWINGS

Various implementations will be described in detail with reference to the accompanying drawings. Wherever possible, the same reference numbers will be used throughout the drawings to refer to the same or like parts. References made to particular examples and implementations are for illustrative purposes, and are not intended to limit the scope of the claims.

Many nations have been actively developing and expanding its capabilities in the field of Intelligence, Surveillance, and Reconnaissance (ISR) over the years. ISR capabilities are crucial for gathering information, monitoring activities, and maintaining situational awareness. These ISR assets include:

Satellite Reconnaissance, where a robust network of Earth observation satellites, including both civilian and military ones, observe any area of interest in hyper-spectral imagery. These satellites are equipped with high-resolution imaging technology and can provide real-time imagery and data for various purposes, including military reconnaissance, disaster monitoring, and resource management.

Unmanned Aerial Vehicles (UAVs) or drones can be used for reconnaissance, surveillance, and target acquisition. Some of these UAVs are capable of long-endurance missions and are equipped with advanced sensors such as signal triangulation for targeting and target identification or locating. Likewise, signal intelligence (SIGINT) may include receivers to intercept and analyze electronic communications, radar signals, and other electronic emissions. These capabilities are crucial for understanding an adversary's electronic footprint and tracking their activities.

Cyber reconnaissance can include cyber espionage, back-hacking, and signal trace routing to identify the sources and hosts of signals being sent wirelessly and otherwise on the battlefield. State-sponsored hacking groups have particularly focused on headquarters and the operational rear of an active combat force.

These methods form the core capabilities that enable triangulation and geo-locating of command centers and other important networked assets. This is not only a problem on the land. Sea power is equally vulnerable to SIGNIT. Further, most ships are high value targets and move relatively slowly (e.g., compared to a tank) making out maneuver of standoff fires impossible. Finally, submarines are particularly vulnerable when surfaced and can be located by their signal emissions. At sea, drones, SIGNIT buoys, and submersibles are all present in strategic locations making signal location obfuscation important.

Additionally, due to net-centricity and Command, Control, and Communications (C3) signal fusion, every asset on the battlefield is capable of seamless integration and coordination of various ISR assets. This enhances the ability to collect, process, and disseminate information efficiently. Likewise, firing solutions can be quickly delivered to units on the battlefield after one or more ISR assets have determined a target location. Accordingly, time is everything and obfuscation must be improved to give more static units time to operate.

Intelligence, Surveillance, and Reconnaissance (ISR) operations aim to gather information about enemy forces, including the location of their army headquarters or other critical military facilities. Locating an army headquarters involves a combination of various intelligence-gathering methods and assets. SIGINT involves intercepting and analyzing electronic signals, such as radio communications, radar emissions, and electronic data transmissions. Army headquarters often communicate using radios and other electronic devices. By monitoring and triangulating these signals, ISR can identify the general location of the headquarters. Open-Source Intelligence (OSINT)involves collecting information from publicly available sources, such as news reports, social media with geotags, and online forums. In some cases, individuals within an army headquarters may inadvertently reveal information about their location or activities through social media posts or public statements.

Pattern of life analysismay track the patterns of life and behavior of enemy personnel, including senior officers, based on their signal movement in order to identify gathering spots. For example, monitoring their daily routines, movements, and meeting locations can provide clues about the whereabouts of an army headquarters. These information collection methods are assisted by advanced analytics that involve the use of machine learning algorithms and statistical inference to process and analyze vast amounts of data, helping to identify patterns and anomalies that may lead to the discovery ofcommand-and-control assets. Other surveillance methods may fail to identify an army headquarters since these facilities are often well camouflaged, concealed, or protected. Therefore, multiple intelligence disciplines and a combination of assets are typically employed to increase the chances of success in ISR operations.

Historically, hardwired command-and-control lines have been used in the operational rear including use of civilian infrastructure. Typically, these communication lines have been electrical which are still susceptible to electronic interference (EMI) and electronic warfare (EW) unless they are coaxially shielded. Due to the capabilities of other types of ISR including hyper-spectral high-definition imaging, HQs must move regularly regardless of their signal visibility. Regularly moving hardwired lines is not feasible.

Further, lateral obfuscation of the transmitting antenna by offsetting the transmitting antenna from the HQ with a hardwire line will still draw targeting to the antenna which in itself is a C3 asset. Accordingly, the systems and methods disclosed herein provide for obfuscation of the location of a command HQ without providing an on-ground target for artillery, missiles, or airstrikes. In addition, the systems and methods disclosed herein provide important EW hardening features for combat communication systems. Specifically, the systems and methods herein may utilize fiber optic communication lines and laser communication lines, which in some cases may be interchangeable (albeit with different considerations such as weather). Thin fiber optics even when coated with a protective sheath may provide far more throughput per kg per km which is an important factor as described below.

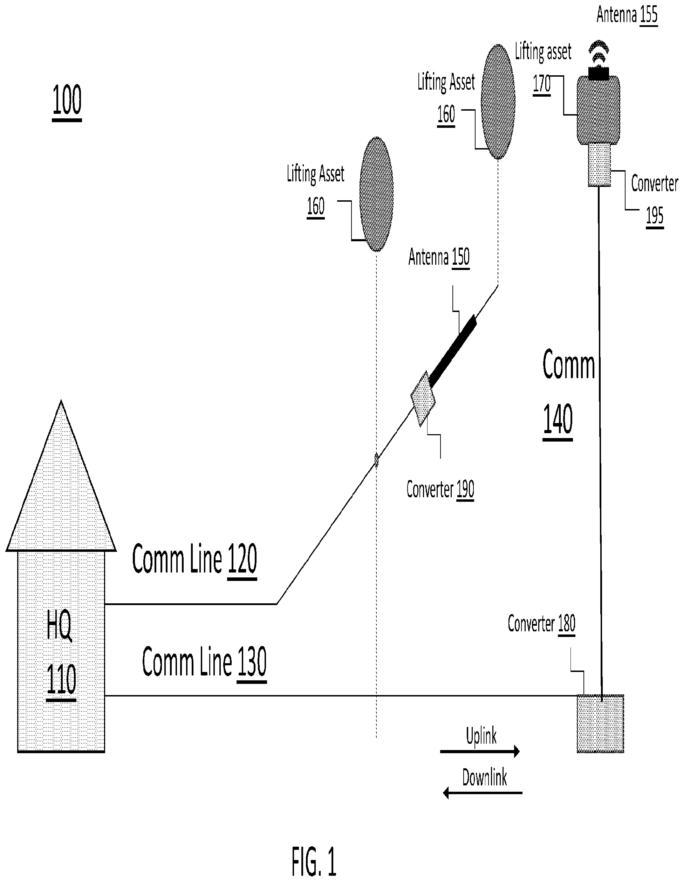

FIG. 1 illustrates a command post communication system 100 that operates to obfuscate the on-ground location of the command post HQ 110. The HQ 110 may connect to an antenna 150 and converter 190 via communication line 120. The communication line 120 may be supported or raised off the ground by lifting assets 160 which may be attached at various lengths along the communication line 120. Each lifting asset 160 (e.g., latex or mylar balloon) may be configured to maintain a particular height or may be anchored so as to limit it's lifting height. The lifting height may be adjustable and programmable and the lifting asset may provided with a control system to adjust buoyancy or upward thrust. The lifting assets 160 may coordinate or have predetermined settings that provide a substantially straight line (given gravity) for the communication line 120 from the pivot point at or near the ground to the antenna 150. The anchor of one or more of the lifting assets 160 may include a grounding wire which may connect to the antenna 150.

For example, the lifting asset 160 at the far end of the antenna 150 may be arranged at a height of 300 to 600 meters. The lifting asset at the far end may connect to the antenna 150 via a cable which may have no communication capability and may be sized to match the weight per meter of the communication line 120. The lifting asset 160 may be a lighter than air volume or craft (e.g., balloon) or may be a quad-copter or other hovering drone. A hovering drone may be configured to periodically adjust its preset height to re-position the antenna 150.

The HQ 110 may communicate with other HQs and with assets on the battlefield. Signals to be sent to other HQs and assets may be transmitted on communication line 120, which may be a fiber optic cable, and these fiber optic signals (i.e., photons) may be converted by converter 190 into electrical signals to stimulate the antenna 150 to emit radio frequency signal of one or more wavelengths so as to communicate with other HQs and assets. The converter 190 may be a media converter that converts from optical signals to electrical signals. The antenna 150 may be a software defined radio (SDR) such as RTL2832. The converter 190 may be configured with an encoder to decode and re-encode information in the different transmission formats of optical and wireless transmission. The converter 190 may include a buffer and one or more processors for managing the transmissions and receipt of information.

Antenna 150 may transmit and receive information in the form of radio frequencies with external devices. Since antenna 150 is suspended in the air, the antenna 150 and its converter 190 advantageously cannot become the target of artillery, ground-to-ground missiles, air-to-ground missiles, bombs, etc. Further, the antenna 150 itself may be difficult to focus on and image using air assets. The communication line 120 may be provided with redundant lifting assets 160 so as to maintain elevation if the lifting assets become targeted and eliminated.

Likewise, communication line 130 may connect to converter 180 which may connect substantially vertically via communication means 140 (e.g., laser, fiber optic, coax cable, M22759 cable, or other wired or wireless link) to lifting asset 170 which may include an antenna 155 and a converter 195. Most lasers may be visible (except is certain types of weather) to ISR assets and may not form the best links for obfuscation of location. On the other hand, laser links (e.g., 140) are weightless and quickly moveable such that, where lifting asset 170 is maneuverable, the laser link may be maintained throughout maneuver. Converter 180 may be protected by armor or disposed underground with protected optical links above the surface. Where communication line 130 and communication means 140 are both fiber optics, the converter 180 may be optional and converter 195 may be a media converter. Where communication means 140

Communication lines 120 and 130 provide an offset of the HQ 110 from any signals from antennas 150 and 155 which may be detected and targeted. Further, the airborne nature of the signal sources of system 100 reduce the ways in which the HQ communications can be targeted by standoff weapons. Because the throughput of the fiber optical cable of communication lines 120 130 is so high, the communication line 120 may terminate in multiple antennas 150 that share spectrum or operate on different frequencies. The antenna 150 may be a ribbon antenna or other low-observable or light weight antenna connected structurally inline between at least two lifting assets 160.

The converters 180, 190, and 195 may be media converters of various types. For example, converter 195 may convert received laser signals that are digitally encoded to contain information (e.g., by on-off keying - OOK) into electrical signals including binary signals and/or electrical antenna pulses to excite the antenna 155 and transmit digital or analog information. For example, converter 180 may convert received digital information from a fiber optic which may be encoded using one or more light frequencies (e.g., with a single or multi-mode fiber) into encoded laser light for transmission to converter 195. Accordingly, these converters may include transmission and receiving capabilities and include signal processors (e.g., modulators, encoders/decoders, multiplexers). Inside a media converter (electro-optical converter), an Ethernet electrical signal may be transformed into an optical signal through an electronic component called a transceiver, which includes a laser diode or light-emitting diode (LED). The transceiver may convert the electrical pulses into light pulses, which is the format used for fiber optic transmission. Likewise, a light sensor (e.g., in converter 190) may receive the light pulses and convert them to electrical signals. At the receiving end of the fiber optic link, another media converter or network device may be used to convert the optical signal back into an electrical signal. This process may involve a receiver module, which typically includes a photodiode or photodetector that detects the incoming light pulses. The photodiode or photodetector may convert the received light pulses into electrical signals. These electrical signals may then be passed on to the destination network device, where they can be processed, decoded, and used for data transmission or other purposes.

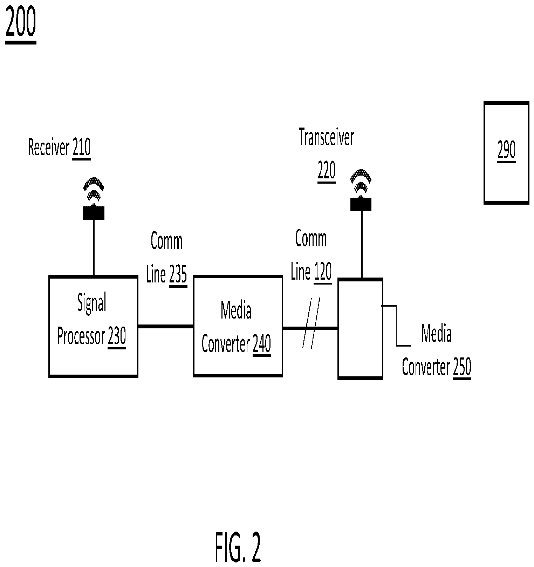

FIG. 2 illustrates a system block diagram of a fiber optic system including additional components which may be provided at HQ 110. The receiver 210 may receive radio signals from terrestrial and space assets and may connect to signal processor 230 for processing of the received signals. Signal processor 230 may provide the information received to HQ personnel and may forward information (according to one or more parameters) to the frontline via system 200. Specifically, signal processor 230 may transmit electrical signals (e.g., Ethernet packets) to media converter 240 via communication line 235. Media converter 240 may convert the electrical signals to optical signals for transmission (and transmit them) on the communication line 120 (e.g., fiber optic) in order to put a distance between the transmitter and the HQ. Communications line 120 may include one or more kilometers of fiber optic and may include one or more splices and amplifiers.In some implementations, signal processor 230 includes an optical transceiver and communication line 235 may be an optical fiber, which may obviate media converter 240.

Communication line 120 may connect to media converter 250 which may convert the fiber optic photonic signals (or laser photonic signals) into electrical signals using a photo diode or the like. The electrical signals or an encoding of them may then be transmitted over wireless transceiver 220 (e.g., RF, WiMAX, WIFI, VHF, UHF) to other HQs and devices 290 within range. This transceiver 220 may respond to the sender of data received at receiver 210 including acknowledgements (e.g., ACK) and response data.Further, signals from the battlefield including from devices 290 may be received by transceiver 220 and relayed back through to the signal processor 230 in HQ 110 so as to transfer information bi-directionally. Accordingly, the media converter 250 may receive electrical signals from the antenna of transceiver 220 and convert those to optical signals and transmit over communication line 120 to media converter 240 which may then convert the optical signals to electrical and transfer the information over communication line 235 to signal processor 230. The receiver 210 may be optional because the communication chain is two-way and other HQs can communication via transceiver 220, or receiver 210 may be a specialized receiver (e.g., SATCOM).

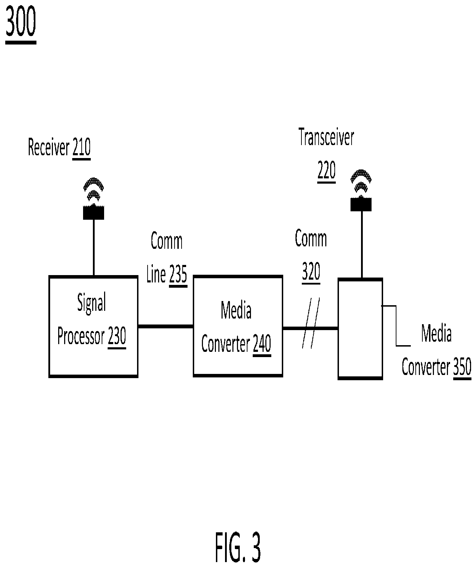

FIG. 3 illustrates a system block diagram of an optical communication system including additional components which may be provided at HQ 110. The receiver 210 may receive radio signals from terrestrial and space assets and may connect to signal processor 230 for processing of the received signals. Signal processor 230 may provide the information received to HQ personnel and may forward information (according to one or more parameters) to the frontline via system 300. Specifically, signal processor 230 may transmit electrical signals (e.g., Ethernet packets) to media converter 240 via communication line 235 (e.g., CAT6 cable) or may transmit optical signals to media converter 240 via communication line 235 (e.g., optical fiber). Media converter 240 may convert the electrical signals or optical signals into laser pulses for transmission (and transmit them) via communication link 320 (e.g., laser or other collimated beam propagating through the air or atmosphere). Communications line 235 may include one or more kilometers of fiber optic and may include one or more splices and amplifiers.

Communication link 320 may connect to media converter 350 which may convert the laser photonic signals into electrical signals using a photodiode or the like. The electrical signals or an encoding of them may then be transmitted over wireless transceiver 220 (e.g., RF, WiMAX, WIFI, VHF, UHF) to other HQs and devices (e.g., 290) within range. This transceiver 220 may respond to the sender of data received at receiver 210 including acknowledgements (e.g., ACK) and response data. Further, signals from the battlefield may be received by transceiver 220 and relayed back through to the signal processor 230 in HQ 110 so as to transfer information bi-directionally. Accordingly, the media converter 350 may receive electrical signals from the antenna of transceiver 220 and convert those to optical laser signals and transmit over communication link 320 to media converter 240 which may then convert the optical signals to electrical and transfer the information over communication line 235 to signal processor 230. That is, media converter 350 may include a laser for transmitting optical data in return to media converter 240. The receiver 210 may be optional because the communication chain is two-way and other HQs can communication via transceiver 220, or receiver 210 may be a specialized receiver (e.g., SATCOM).

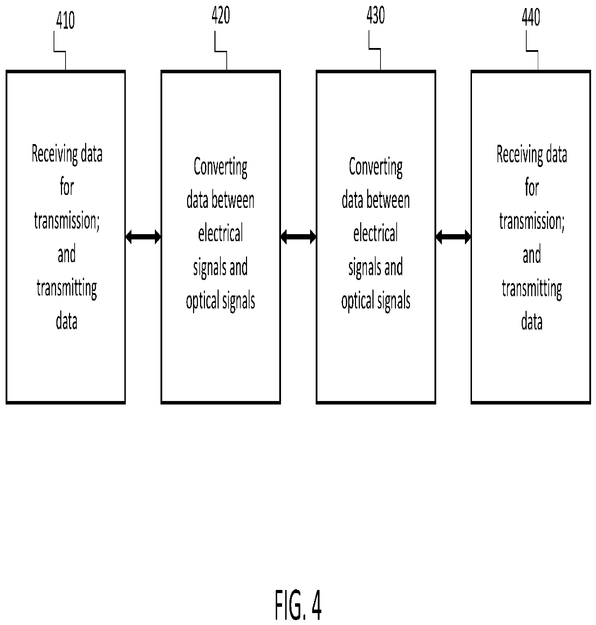

FIG. 4 illustrates a radio link establishment method according to some implementations. As described above, the radio links established in systems 100, 200, and 300 included optical and electrical links in the communication chain, where the optical links advantageously provide EMI protection. In reference to FIG. 1-4, FIG. 4 illustrates the method of relaying data back and forth between an HQ in a net-centric style communication scenario. The means for performing any of the actions, steps, or processes of the method of FIG. 4 may include transceivers (e.g., 210/220), media converters (e.g., 240/350), signal processors (e.g., 230), and other processors (e.g., modems) or processor systems of one or more processors described herein. Further, the method of FIG. 4 may be implemented in any of systems 100, 200, or 300 described above.

At block 410, the processors/transceivers may receive data for transmission and transmit that data over a communication link (e.g., 120/130/235). After transiting the communication link, the transmitted data may be converted, at block 420, between electrical signals and optical signals (e.g., by a bidirectional media converter) and the data may be transmitted onto one or more further links with one or more conversions. At block 430, the transmitted data following block 420 may be converted between electrical signals and optical signals (e.g., by a bidirectional media converter). At block 440, a processor/transceiver may receive the converted data and transmit the data (e.g., wirelessly as an endpoint). After receiving the data, the process at blocks 410 and 440 may transmit return acknowledgements (e.g., ACK) to confirm receipt and/or forward transmission.

Now as shown, the process of FIG. 4 may be reversible, such that each transceiver and bi-directional conversion of data between links is reversible. For example, where block 410 is executed or performed in HQ 110 and block 440 is executed or performed at antenna 150, then the system may, at block 410, receive data for transmission from HQ 110 (e.g., to antenna 150) and may receive data for transmission from the communication chain connected to antenna 150 (e.g., to HQ computers or processors). Likewise, at block 440 the system (e.g., system of processors) may receive data from HQ 110 via the communication chain (e.g., 120) and may receive data for transmission (e.g., to HQ 110) from antenna 150 (e.g., from devices 290). The conversion blocks 420/430 may be performed by one or more media converters provided in the communication chain between the elevated antenna (e.g., antenna 150/155) and signal processor 230 in HQ 110.

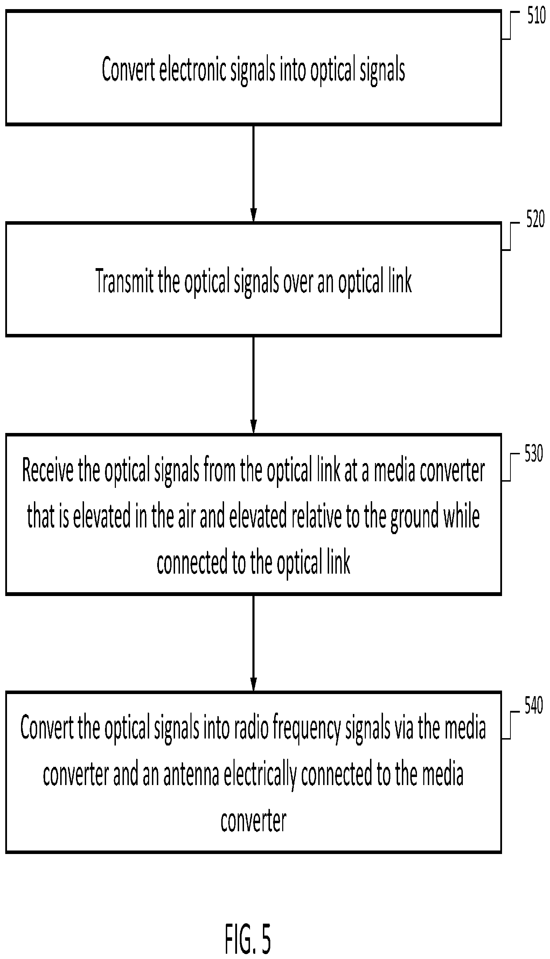

FIG. 5 illustrates a method for obfuscation of radio signals from aheadquarters. At block 510, with reference to FIG. 1-5, the method may convert electronic signals into optical signals (e.g., by a media converter). At block 520, the method may transmit (transport) the optical signals over an optical link (e.g., laser link between laser Rx/Tx at each end or fiber optic link between Rx/Tx at each end). At block 530, the method may receive the optical signals from the optical link at a media converter that is elevated in the air and elevated relative to the ground while connected to the optical link (e.g., by lifting assets 160/170). At block 540, the method may convert the optical signals into radio frequency signals via the media converter and an antenna (e.g., 150/155) electrically connected to the media converter. The means for performing any of the actions, steps, or processes of the method of FIG. 5 may include transceivers (e.g., 210/220), media converters (e.g., 240/350), signal processors (e.g., 230), and other processors (e.g., modems) or processor systems of one or more processors described herein. Further, the method of FIG. 5 may be implemented in any of systems 100, 200, or 300 described above and as part of the process illustrated in FIG. 4.

The processors and converters described herein may be a system-on-a-chip or a system-in-a-package, or other integrated circuit including hardware, firmware, software, or a combination thereof. The term "system-on-a-chip" (SoC) is used herein to refer to a single integrated circuit (IC) chip that contains multiple resources and/or processors integrated on a single substrate. A single SoC may contain circuitry for digital, analog, mixed-signal, and radio-frequency functions. A single SoC may also include any number of general purpose and/or specialized processors (digital signal processors, modem processors, video processors, etc.), memory blocks (e.g., ROM, RAM, Flash, etc.), and resources (e.g., timers, voltage regulators, oscillators, etc.). SoCs may also include software for controlling the integrated resources and processors, as well as for controlling peripheral devices.

The term "system-in-a-package" (SIP) may be used herein to refer to a single module or package that contains multiple resources, computational units, cores and/or processors on two or more IC chips, substrates, or SoCs. For example, a SIP may include a single substrate on which multiple IC chips or semiconductor dies are stacked in a vertical configuration. Similarly, the SIP may include one or more multi-chip modules (MCMs) on which multiple ICs or semiconductor dies are packaged into a unifying substrate. A SIP may also include multiple independent SoCs coupled together via highspeed communication circuitry and packaged in close proximity, such as on a single motherboard or in a single computing device. The proximity of the SoCs facilitates high speed communications and the sharing of memory and resources.

As used herein, the term "processing system" is used herein to refer to one more processors, including multi-core processors, that are organized and configured to perform various computing functions. Various methods may be implemented in one or more of multiple processors including signal processors, transcievers, encoders/decoders and others as described herein.

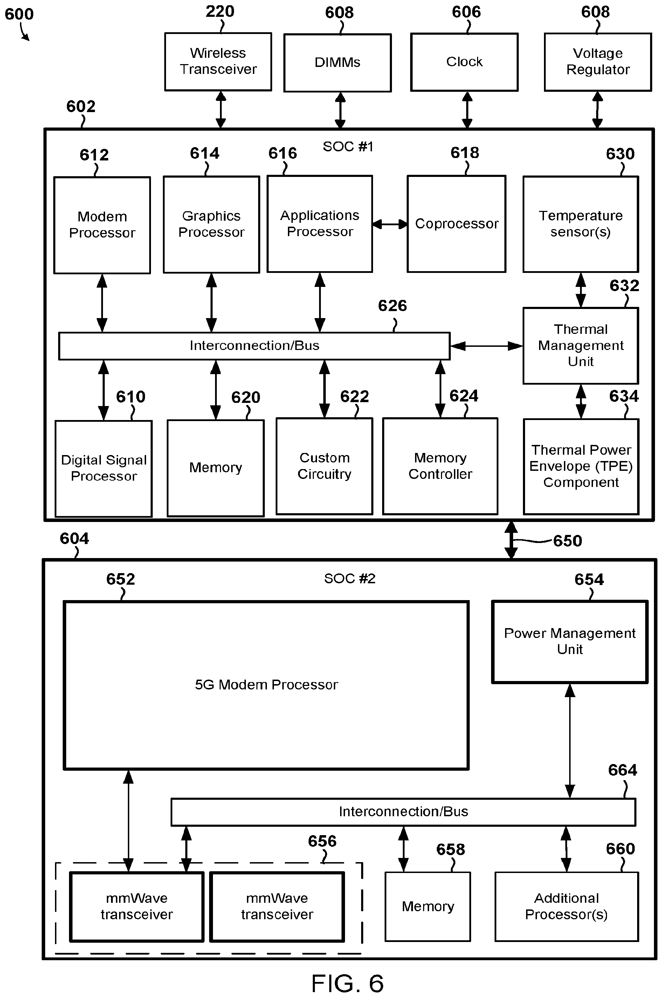

With reference to FIGS. 1-6, the illustrated example computing device 600 (which may be a system-in-a-package in some implementations) includes a two SoCs 602, 604 coupled to a clock 606, a voltage regulator 608, a wireless transceiver 220 configured to send and receive wireless communications via an antenna (not shown) to/from wireless computing devices, such as a base station, wireless device, and/or computing device (e.g., system 230). In some implementations, the first SoC 602 may operate as central processing unit (CPU) of the computing device 600 that carries out the instructions of software application programs by performing the arithmetic, logical, control and input/output (I/O) operations specified by the instructions. In some implementations, the second SoC 604 may operate as a specialized processing unit. For example, the second SoC 604 may operate as a specialized 5G processing unit responsible for managing high volume, high speed (e.g., 5 Gbps, etc.), and/or very high frequency short wavelength (e.g., 28 GHz mmWave spectrum, etc.) communications.

The first SoC 602 may include a digital signal processor (DSP) 610, a modem processor 612, a graphics processor 614, an application processor (AP) 616, one or more coprocessors 618 (e.g., vector co-processor) connected to one or more of the processors, memory 620 (e.g., cache), custom circuity 622, memory controller 624, an interconnection/bus module 626, one or more sensors 630 (e.g., accelerometer, temperature sensor, pressure sensor, optical sensor, infrared sensor, analog sound sensor, etc.), a thermal management unit 632, and a thermal power envelope (TPE) component 634. The second SoC 604 may include a low power processor 652, a power management unit 654, an interconnection/bus module 664, a BT controller 656, memory 658, and various additional processors 660, such as an applications processor, packet processor, etc.

Each processor 610, 612, 614, 616, 618, 624, 652, 660 may include one or more cores, and each processor/core may perform operations independent of the other processors/cores. For example, the first SoC 602 may include a processor that executes a first type of operating system (e.g., FreeBSD, LINUX, OS X, etc.) and a processor that executes a second type of operating system (e.g., MICROSOFT WINDOWS 10). In addition, any or all of the processors 610, 612, 614, 616, 618, 624, 652, 660 may be included as part of a processor cluster architecture (e.g., a synchronous processor cluster architecture, an asynchronous or heterogeneous processor cluster architecture, etc.).

The first and second SoC 602, 604 may include various system components, resources, and custom circuitry for managing sensor data, analog-to-digital conversions, wireless data transmissions, and for performing other specialized operations, such as decoding data packets and processing encoded audio and video signals for rendering in a web browser or audio/video application. For example, the memory controller 624 of the first SoC 602 may include power amplifiers, voltage regulators, oscillators, phase-locked loops, peripheral bridges, data controllers, timers, and other similar components. The custom circuitry 622 may include circuitry to interface with peripheral devices, such as cameras, electronic displays, wireless communication devices, external memory chips, specialized encoders and decoders, optical transmitters, photodiodes, photodetectors, etc.

The first and second SoC 602, 604 may communicate via interconnection/bus module 650. In some implementations, the interconnection/bus module may be a connection established by transceiving (i.e., receiving and transmitting) components within both the SoC 602 and SoC 604. For example, the low power processor 652 may include a universal asynchronous receiver-transmitter (UART) and the application processor 616 may include a multiple signal messages (MSM) UART driver that is communicatively connected to the UART of the low power processor 652.

The various processors 610, 612, 614, 616, and 618, may be interconnected to one or more memory elements 620, memory controller 624, and custom circuitry 622, and a thermal management unit 632 via an interconnection/bus module 626. Similarly, the low power processor 652 may be interconnected to the power management unit 654, the BT controller 656, memory 658, and various additional processors 660 via the interconnection/bus module 664. The interconnection/bus module 626, 650, 664 may include an array of reconfigurable logic gates and/or implement a bus architecture (e.g., CoreConnect, AMBA, etc.). Communications may be provided by advanced interconnects, such as high-performance networks-on chip (NoCs).

In various implementations, any or all of the processors 610, 612, 614, 616, and 618 in the system may operate as the SoC's main processor, central processing unit (CPU), microprocessor unit (MPU), arithmetic logic unit (ALU), etc. One or more of the coprocessors 618 may operate as the CPU. In addition to the example SIP discussed above, various implementations may be implemented in a wide variety of computing systems, including a single processor, multiple processors, multicore processors, or any combination thereof.

The first and/or second SoCs 602, 604 may further include an input/output module (not illustrated) for communicating with resources external to the SoC, such as a clock 606, the DIMMs 608, a voltage regulator 608, and one or more wireless transceivers 220. Resources external to the SoC (e.g., clock 606, voltage regulator 608) may be shared by two or more of the internal SoC processors/cores (e.g., collectively processor system). Further, the memory controller 624 may connect to external memory including DIMMs 608 and control memory accesses and ports to the DIMMs 608 as described further below.

In addition to the example computing device 600 discussed above, various implementations may be implemented in a wide variety of computing systems, which may include a single processor, multiple processors, multicore processors, or any combination thereof. In some implementations, the various processors of the SoC 602 and SoC 604 may be located within a same SoC. For example, the application processor 616 and processor 652 may be located within a same SoC, such as in a single SoC of a wearable device, which may access external memory (e.g., DIMMs 608) via the memory controller 624 and interconnection bus 626.

Implementation examples are described in the following paragraphs. While some of the following implementation examples are described in terms of example methods that may be performed in a computing device, further example implementations may include: a system with transceivers, media converters, and optical links configured to perform the methods of the following implementation examples; a computing device including means for performing functions of the following implementation examples, one or more processors configured to perform the methods of the following implementation examples; and a non-transitory, processor-readable memory having stored thereon processor-executable instructions configured to cause one or more processors to perform the methods of the following implementation examples.

Example 1. A data transmission system for obfuscation of host location, including a first electro-optical converter to convert electronic signals into optical signals on an optical link, the optical link transporting the optical signals from the first electro-optical converter to a second electro-optical converter;the second electro-optical converter receiving the optical signals from the optical link, the second electro-optical converter being elevated in the air and elevated relative to the ground while connected to the optical link; andan antenna that converts the optical signals into radio frequency signals together with the second electro-optical converter, the antenna being electrically connected to the second electro-optical converter.

Example 2. The system of example 1,where the antenna is elevated in the air and elevated relative to the ground while connected to the second electro optical converter.

Example 3.The system of example 1,where the first optical link is established by a laser propagating through the atmosphere to the second electro-optical converter.

Example 4.The system of example 1, where the first optical link is established by photonic transmission over a fiber optic cableto the second electro-optical converter.

Example 5.The system of example 1, further including one or more lifting systems,where the antenna, the second electro optical converter, and at least a portion the first optical link are elevated above the ground by the lifting systems.

Example 6. The system of example 5, where the one or more lifting systems are either balloons or quad-copter drones, or a combination thereof.

Example 7.A method for obfuscating of host location, including converting electronic signals into optical signals, transmitting the optical signals over an optical link, receiving the optical signals from the optical link at an electro-optical converter that is elevated in the air and elevated relative to the ground while connected to the optical link, andconverting the optical signals into wireless signals via the electro-optical converter and an antenna electrically connected to the electro-optical converter.

Example 8. The method of example 7, further including propagating the optical signals over fiber optic cable or laser transmissions as the optical link.

Example 9. The method of example 7, further including receiving further wireless signals at the antenna, converting the received further wireless signals via the electro-optical converter to further optical signals, and transmitting the further optical signals over the optical link.

As used in this application, the terms "component," "module," "system," and the like are intended to include a computer-related entity, such as, but not limited to, hardware, firmware, a combination of hardware and software, software, or software in execution, which are configured to perform particular operations or functions. For example, a component may be, but is not limited to, a process running on a processor, a processor, an object, an executable, a thread of execution, a program, and/or a computer. By way of illustration, both an application running on a computing device and the computing device may be referred to as a component. One or more components may reside within a process and/or thread of execution and a component may be localized on one processor or core and/or distributed between two or more processors or cores. In addition, these components may execute from various non-transitory computer readable media having various instructions and/or data structures stored thereon. Components may communicate by way of local and/or remote processes, function or procedure calls, electronic signals, data packets, memory read/writes, and other known network, computer, processor, and/or process related communication methodologies.

Various implementations illustrated and described are provided merely as examples to illustrate various features of the claims. However, features shown and described with respect to any given implementation are not necessarily limited to the associated implementation and may be used or combined with other implementations that are shown and described. Further, the claims are not intended to be limited by any one example implementation. For example, one or more of the operations of the methods may be substituted for or combined with one or more operations of the methods.

The foregoing method descriptions and the process flow diagrams are provided merely as illustrative examples and are not intended to require or imply that the operations of various implementations must be performed in the order presented. As will be appreciated by one of skill in the art the order of operations in the foregoing implementations may be performed in any order. Words such as "thereafter," "then," "next," etc. are not intended to limit the order of the operations; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm operations described in connection with the implementations may be implemented as electronic hardware, computer software, or combinations of both. To clearly illustrate this interchangeability of hardware and software, various illustrative components, blocks, modules, circuits, and operations have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the claims.

The hardware used to implement the various illustrative logics, logical blocks, modules, and circuits described in connection with the implementations may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some operations or methods may be performed by circuitry that is specific to a given function.

In one or more implementations, the functions described may be implemented in hardware, software, firmware, or any combination thereof. If implemented in software, the functions may be stored as one or more instructions or code on a non-transitory computer-readable medium or non-transitory processor-readable medium. The operations of a method or algorithm disclosed herein may be implemented in a processor-executable software module, which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable media may include RAM, ROM, EEPROM, FLASH memory, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed implementations is provided to enable any person skilled in the art to make or use the claims. Various modifications to these implementations will be readily apparent to those skilled in the art, and the generic principles defined herein may be applied to other implementations without departing from the scope of the claims. Thus, the present disclosure is not intended to be limited to the implementations shown herein but is to be accorded the widest scope consistent with the following claims and the principles and novel features disclosed herein.

## Claims

1. A data transmission system for obfuscation of host location, comprising:
a first electro-optical convertertoconvert electronic signals into optical signals on an optical link, the optical link transporting the optical signals from the first electro-optical converter to a second electro-optical converter;
the second electro-optical converter receiving the optical signals from the optical link, thesecond electro-optical converter being elevated in the air and elevated relative to the ground while connected to the optical link; and
an antenna that converts the optical signals into wireless signals together with thesecond electro-optical converter, the antenna being electrically connected to the second electro-optical converter.

2. The data transmission system of claim 1, wherein the antenna is elevated in the air and elevated relative to the ground while connected to the second electro optical converter.

3. The data transmission system of claim 1, wherein the first optical link is established by a laser propagating through the atmosphereto the second electro-optical converter.

4. The data transmission system of claim 1, wherein the first optical link is established by photonic transmission over a fiber optic cableto the second electro-optical converter.

5. The data transmission system of claim 1, further comprising:
one or more lifting systems,
wherein the antenna, the second electro optical converter, and at least a portion the first optical link are elevated above the ground by the lifting systems.

6. The data transmission system of claim 5, wherein the one or more lifting systems are either balloons or quad-copter drones, or a combination thereof.

7. A method for obfuscating of host location, comprising:
converting electronic signals into optical signals;
transmitting the optical signals over an optical link;
receiving the optical signals from the optical link at an electro-optical converter that is elevated in the air and elevated relative to the ground while connected to the optical link; and
converting the optical signals into wireless signals via the electro-optical converter and an antenna electrically connected to the electro-optical converter.

8. The method of claim 7, the transmitting further comprising:
propagating the optical signals as laser transmissions through the atmosphereto the second electro-optical converter.

9. The method of claim 7, the transmitting further comprising:
propagating the optical signals as photonic transmissions over a fiber optic cableto the second electro-optical converter.

10. The method of claim 7, further comprising:
receiving further wireless signals at the antenna;
converting the received further wireless signals via the electro-optical converter to further optical signals; and
transmitting the further optical signals over the optical link.
